# EUROPEAN PATENT APPLICATION

(11) **EP 0 563 381 A1**
(43) Date of publication of application: **06.10.1993**
(21) Application number: 91917820.2
(22) Date of filing: 21.10.1991
(51) Int. Cl.: G21B 1/00, F24J 3/00

(54) **HEAT GENERATION APPARATUS AND HEAT GENERATION METHOD**

(71) Applicant: TECHNOVA INC., Tokyo 100 (JP)
(72) Inventor: IKEGAMI, Hideo, Nagoya-shi, Aichi 461 (JP); KUNIMATSU, Keiji, Sapporo-shi, Hokkaido 004 (JP)
(74) Representative: Votier, Sidney David
(86) International application number: JP9101441
(87) International publication number: WO9308576

(57) **Abstract**

A heat generation apparatus utilizing a Pons-Fleischmann effect and its method. A conventional heat generator uses an external source to supply D.C. current to positive and negative plates in an electrolyte. In this invention, the arrangement of the positive plate, the electrolyte, and the negative plate is equivalent to a primary cell, and generates excessive heat on the basis of a Pons-Fleischmann effect without using an external power supply. In this way, the number of components of the apparatus can be reduced.

## Description

### TECHNICAL FIELD

The present invention relates to an apparatus for and a method of generating heat, and more particularly to an apparatus for and a method of generating heat by utilizing the Pons-Fleischmann effect.

### BACKGROUND ART

Professor Pons (Utah university, U.S.A.), Professor Fleischmann (Southampton University, England), and others have published the so-called cold fusion phenomenon in March, 1989. They have made the following experiment. Heavy water (D₂O) containing lithium deuteroxide (LiOD) is used as an electrolyte. A cathode made of palladium which is a hydrogen absorbing metal, and an anode made of platinum are dipped in the electrolyte. Then, a d.c. current is caused to flow between the cathode and the anode with the aid of external means, to electrolyze the electrolyte.

According to this experiment, heat indicative of energy greater than electric power which is supplied for the electrolysis is generated at the cathode. This heat is called "excess heat". After the above experiment, the generation of the excess heat has been confirmed by many scientists. At present, the generation of the excess heat is widely known as the Pons-Fleischmann effect.

As to the Pons-Fleischmann effect and a heat generation apparatus utilizing this effect, please refer to the International Publication No. 90/10935.

### DISCLOSURE OF INVENTION

It is an object of the present invention to provide an apparatus for generating heat which apparatus utilizes the Pons-Fleischmann effect and does not require any external power source.

In order to attain the above object, according to the present invention, a chemical relation among an anode, an electrolyte and a cathode is made similar to that in a primary cell, to generate a difference in potential between the anode and the cathode.

Thus, an external power source which is required in the prior art, becomes unnecessary. Accordingly, the apparatus for generating heat can be made small in size, simple in construction, light in weight, low in manufacturing cost, and so on.

The present invention will be explained below in more detail.

As will be described in Claims, an apparatus for generating heat in accordance with the present invention comprises (a) an electrolyte containing a deuterium ion or a deuter oxide ion, (b) an anode having a surface which is kept in contact with the electrolyte, and made of a reactive metal which can be anodically dissolved when used as the anode, (c) a cathode dipped into the electrolyte and made of a hydrogen absorbing metal, and (d) connecting means for connecting the anode and the cathode electrically.

In more detail, a substance obtained by adding a deutirium ion or a deuter oxide ion to an electrolyte which is generally used in a primary cell, can be used, as an electrolyte according to the present invention.

Now, examples of the electrolyte used in the present invention will be explained below.
(a-1), D₂O is used as a solvent and at least one selected from a group consisting of DCl, D₂SO₄ and LiOD is used as a solute. Preferably, the solute content is put in a range from 0.1 to 8 mol/l. In more detail, the DCl content is put in a range from 0.1 to 8 mol/l, the D₂SO₄ content is put in a range from 2 to 4 mol/l, and the LiOD content is put in a range from 1 to 3 mol/l.
   Such an electrolyte may contain a first auxiliary agent for preventing a deuterium atom D which is produced at the surface of the cathode on the basis of electrolysis, effectively from being transformed into a deuterium molecule D₂. A surfactant is used as the first auxiliary agent. Actually, arsenic, thiourea, hydrogen sulfide, or benzotriazole is used as the first auxiliary agent. The surfactant content is preferably in a range from 10⁻⁵ to 1 mol/l.
   Further, a second auxiliary agent for impregnating deuterium into the cathode can be added to the above electrolyte. An organic or inorganic complex-forming agent is used as the second auxiliary agent. Actually, 5-fluorocyclopentadiene or 5-acylicyclopentadiene is used as the second auxiliary agent. The content of the second auxiliary agent is preferably put in a range from 10⁻⁴ to 1 mol/l.
(a-2) A molten salt containing a negative deuterium ion D⁻ can be used as a electrolyte. Low-temperature molten salts such as Bu₄NCl₄, AlCl₄ and Al₄Cl₇, can be used as the above molten salt. Further, a eutectic mixture of chlorides such as LiCl·KCl/LiD can also be used. Further, an alkali metal can be added to the molten salt.
(a-3) Deuterated organic polar solvents such as deuterated γ-butyrolactone in which LiBF₄ is dissolved, deuterated propylene carbonate in which LiClO₄ is dissolved, and deuterated 1,2-dimethoxyethane in which LiClO₄ is dissolved can also be used as the electrolyte.
(a-4) A deuterated inorganic or organic metallic compound can also be used as the electrolyte.
(b) An active metal which can be eluted when used as an anode, means a metal, the thermodynamic equilibrium potential of which lies on the negative potential side when compared with the α-β transition potential in the Pd-D system. Such a metal is known as a self-consumption metal in the field of battery. Accordingly, a general self-consumption metal can be used for forming an anode. Examples of the self-consumption metal for forming an anode will be explained below.
   In a case (b-1) where the electrolyte is an aqueous solution, the anode is made of Zn, Mn, or Al.
   In a case (b-2) where the electrolyte is the organic polar solvents or deutrated inorganic or organic metallic compound, an alkali metal or alkali earth metal is used for forming the anode. Actually, the anode is made of Li, Ca, Na, K, or Mg.
   Though the shape of the anode is not limited, it is preferable to use the vessel for the electrolyte as the anode, for the purpose of reducing the number of parts for making up the apparatus. In this case (b-3), at least the inner surface of the vessel, that is, that surface of the vessel which is to be kept in contact with the electrolyte, is wholly or partially made of a metal which can be anodically dissolved when used as an anode.
(c) Palladium or an alloy containing palladium (for example, Pd/Ag) is used as a hydrogen absorbing metal for forming a cathode.
   It is preferable that the circumference of the cathode is equally spaced apart from the cathode. Accordingly, in a case where the anode is used as the vessel for the electrolyte as mentioned above, the cathode is disposed on the center line of the anode.
(d) The connecting means is used for connecting the anode and the cathode electrically. Accordingly, a general lead wire is used as the connecting means. It is to be noted that the connecting means may be provided with a desired control circuit for controlling an electrical relation between the anode and the cathode (for example, the potential difference between the anode and the cathode, the current flowing between the anode and the cathode, and a time during which a current flows between the anode and the cathode).
(e) Owing to the above construction, a current flows between the anode and the cathode. The apparatus having the above construction performs the same operation as that of the conventional heat generation apparatus having an external power source between the anode and the cathode, and thus the excess heat is generated at the cathode.

In order to utilize the excess heat, a thermal conductor is put in direct contact with the cathode, and the excess heat at the cathode is led to the outside of the apparatus through the thermal conductor. A material having high thermal conductivity such as a metal, or a heat pipe can be used as the thermal conductor. The details of the thermal conductor are described in a Japanese patent application (Appl. No. hei 2-248,772) filed by the present applicant, or a U.S. patent application entitled "Apparatus and Method for utilizing heat generated owing to Pons-Fleischmann effect", filed on September 17, 1991, and assigned to the present applicant.

A method of leading the excess heat to the outside through the electrolyte, is described in the above-referred International Publication No. 90/10935.

### BRIEF DESCRIPTION OF DRAWINGS

Fig. 1 is a sectional view showing an embodiment of an apparatus for generating heat in accordance with the present invention.

Fig. 2 is a graph showing the generation of excess heat.

Fig. 3 is a sectional view showing another embodiment of an apparatus for generating heat in accordance with the present invention.

### BEST MODE FOR CARRYING OUT THE INVENTION

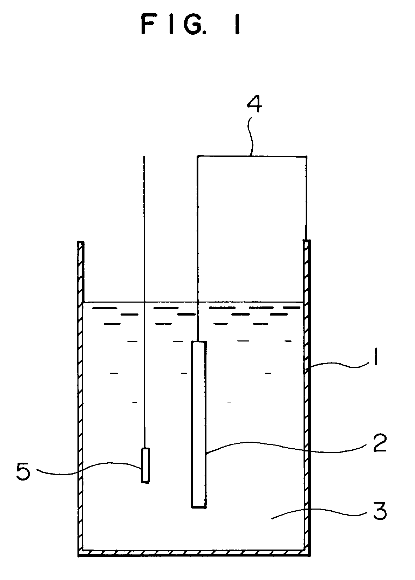

As shown in Fig. 1, an embodiment of an apparatus for generating heat in accordance with the present invention includes a zinc vessel 1 which serves as an anode made of the reactive metal, a palladium electrode 2 which serves as a cathode made of the hydrogen absorbing metal, an electrolyte 3 held by the Zn vessel and made of LiOD/D₂O for dipping the whole of the palladium electrode 2 therein, and connecting means 4 for forming a short circuit between the Zn vessel 1 and the palladium electrode 2. A thermistor 5 is dipped in the electrolyte 3 so as to be disposed in the neighborhood of the palladium electrode 2.
(1) The Zinc vessel 1 has the form of a hollow cylinder whose upper end is removed, an inner diameter of 3 cm, and a height of 5.5 cm. The vessel of a general dry cell of the UM-1 type is used as the vessel 1.
(2) The palladium cathode is a cylinder having a diameter of 1 mm and a height of 2 cm. The cathode is made of palladium having a purity of 99.99% and produced by the Johnson & Matthay Co.
(3) 60 cc of D₂O containing 0.1 mol/l LiOD is used as the electrolyte 3. Ordinary D₂O and LiOD are used for making the electrolyte 3. A stopper made of resin is inserted into the upper end of the vessel, and the palladium electrode 2 is held by the stopper so that the whole of the palladium electrode 2 is dipped in the electrolyte.
(4) A wire is used as the connecting means 4 for connecting the anode and the cathode. The wire is bonded to the anode and the cathode by spot welding.

### (Measuring Conditions)

The temperature of the electrolyte 3 was measured by the thermistor 5. This temperature measurement was made in a state that the present embodiment is placed in a Dewar vessel, that is, the measurement was made in a thermostat.

### (Result)

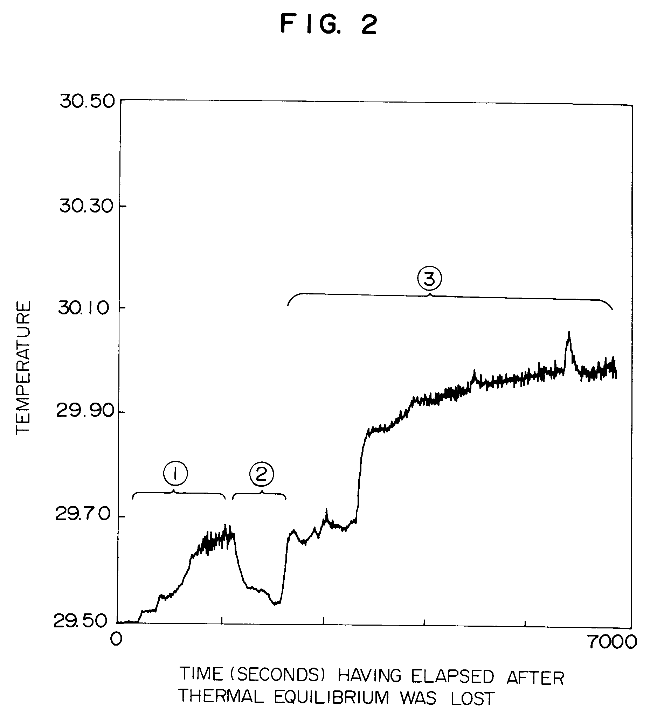

Fig. 2 shows the result of the above experiment. In Fig. 2, a time (seconds) which has elapsed after the anode and the cathode were shorted, is plotted as abscissa, and a temperature (°C) measured by the thermistor 5 is plotted as ordinate.

Fig. 2 can be considered as follows. Thermal data shown in Fig. 2 can be divided into three time regions.

In the first time region, deuterium D is absorbed by the cathode on the basis of the shorting between the anode and the cathode, and thus heat is generated.

In the second time region, the absorption of D by the cathode is almost completed, and heat generation is stopped. Accordingly, the measured temperature is returned to the temperature of the thermostat.

In the third time region, absorptivity becomes greater than a specified value. Thus, cold fusion is started, and heat is generated. At this time, the product of a current and a voltage is on the order of µW, and an increase in temperature corresponds to heat generation on the order of mW. The potential of the palladium electrode was kept at about -1.0 V/SCE, during the measuring period.

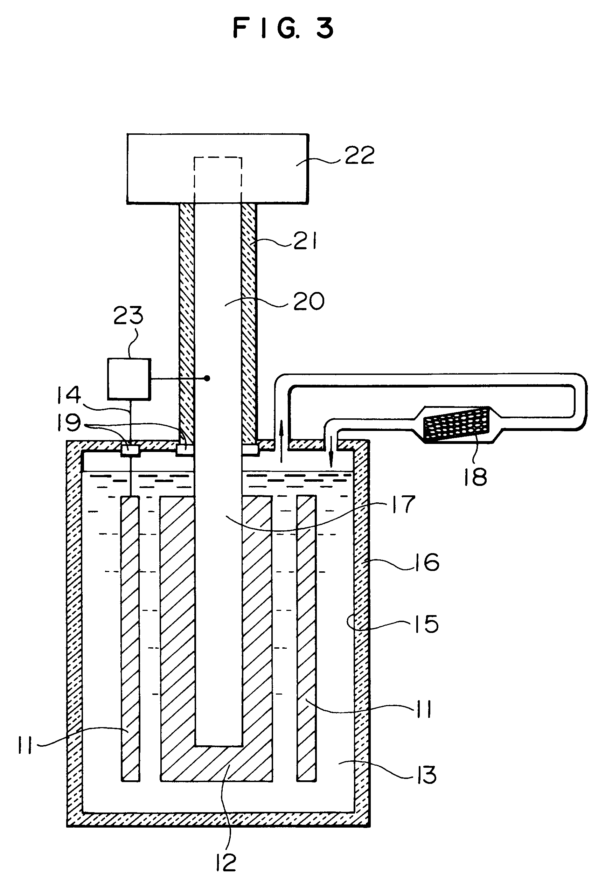

Fig. 3 shows another embodiment of an apparatus for generating heat in accordance with the present invention. In the present embodiment, a cathode 12 and an anode 11 are both dipped in an electrolyte 13. Reference numeral 15 designates a vessel for holding the electrolyte. The vessel 15 is covered with a heat insulating material 16. A thermal conductor 20 made of a metal (that is, a material having electrical conductivity), is partly buried in a central portion of the cathode 12. An insulating, sealing member 19 is interposed between the thermal conductor 20 and the vessel 15, and that portion of the thermal conductor 20 which protrudes from the vessel 15, is covered with a heat insulating material 21. A thermoelectric conversion element 22 is mounted on the upper end of the thermal conductor 20. Further, reference numeral 14 designates a line for connecting the anode 11 electrically with the cathode 12 (it is to be noted that the thermal conductor 20 has electrical conductivity), 23 the well-known, constant-voltage circuit, and 18 a catalyzer device for transforming deterium D₂ which is generated in the vessel, into heavy water.

The electrolyte, anode and cathode of the present embodiment are made of the same materials as used in the embodiment of Fig. 1. Accordingly, the excess heat generated at the cathode 12 is efficiently led to the outside.

## Claims

1. An apparatus for generating heat by utilizing the Pons-Fleischmann effect, comprising:
an electrolyte containing one of deuterium ions and deuter oxide ions;
an anode having a surface which is kept in contact with the electrolyte, and made of a reactive metal which can be eluted when used as the anode;
a cathode dipped in the electrolyte and made of a hydrogen absorbing metal; and
connecting means for connecting the anode and the cathode electrically.

2. An apparatus for generating heat as claimed in Claim 1, wherein the electrolyte is obtained in such a manner that D₂O is used as a solvent and at least one selected from a group consisting of DCl, D₂SO₄ and LiOD is used as a solute.

3. An apparatus for generating heat as claimed in Claim 2, wherein a first auxiliary agent for preventing the generation of D₂O is added to the electrolyte.

4. An apparatus for generating heat as claimed in Claim 3, wherein the first auxiliary agent is a surfactant.

5. An apparatus for generating heat as claimed in Claim 4, wherein the surfactant is at least one selected from a group consisting of arsenic, thiourea, hydrogen sulfide, and benzotriazole.

6. An apparatus for generating heat as claimed in one of Claims 2 to 5, wherein a second auxiliary agent for impregnating deuterium into the cathode is added to the electrolyte.

7. An apparatus for generating heat as claimed in Claim 6, wherein the second auxiliary agent is one of an organic complex-forming agent.

8. An apparatus for generating heat as claimed in Claim 6, wherein the second auxiliary agent is one of 5-fluorocyclopentadiene and 5-acylicyclopentadiene.

9. An apparatus for generating heat as claimed in Claim 1, wherein the electrolyte is a molten salt.

10. An apparatus for generating heat as claimed in Claim 9, wherein the molten salt is a low-temperature molten salt.

11. An apparatus for generating heat as claimed in Claim 10, wherein the low-temperature molten salt is at least one selected from a group consisting of Bu₄NCl₄, AlCl₄ and Al₄Cl₇.

12. An apparatus for generating heat as claimed in Claim 9, wherein the molten solt is a eutectic mixture of chlorides.

13. An apparatus for generating heat as claimed in Claim 12, wherein the eutectic mixture of chlorides is LiCl·KCl/LiD.

14. An apparatus for generating heat as claimed in Claim 9, wherein an alkali metal is added to the electrolyte.

15. An apparatus for generating heat as claimed in Claim 1, wherein the electrolyte is a deuterated organic polar solvent.

16. An apparatus for generating heat as claimed in Claim 15, wherein the organic polar solvent is one of r-butyrolactone in which LiBF₄ is dissolved, propylene carbonate in which LiClO₄ is dissolved, and 1,2-dimethoxyethane in which LiClO₄ is dissolved.

17. An apparatus for generating heat as claimed in Claim 1, wherein the electrolyte is an inorganic or organic compound.

18. An apparatus for generating heat as claimed in one of Claims 2 to 8, wherein the anode is made of one selected from a group consisting of Zn, Mn and Al.

19. An apparatus for generating heat as claimed in one of Claims 15 to 17, wherein the anode is made of one of an alkali metal and an alkali earth metal.

20. An apparatus for generating heat as claimed in Claim 19, wherein the anode is made of one selected from a group consisting of Li, Ca, Na, K and Mg.

21. An apparatus for generating heat as claimed in one of Claims 1 to 20, wherein the hydrogen absorbing metal is one of palladium and an alloy containing palladium.

22. An apparatus for generating heat as claimed in one of Claims 1 to 21, wherein the connecting means includes means for controlling an electrical relation between the anode and the cathode.

23. An apparatus for generating heat as claimed in one of Claims 1 to 22, further comprising a thermal conductor connected with the cathode.

24. An apparatus for generating heat by utilizing the Pons-Fleischmann effect, comprising:
an electrolyte containing one of a deuterium ion and a deuter oxide ion;
a first electrode having the form of a vessel which holds the electrolyte, and made of a reactive metal which can be eluted when used as an anode;
a second electrode dipped in the electrolyte and made of a hydrogen absorbing metal; and
connecting means for connecting the first and second electrodes electrically.

25. An apparatus for generating heat as claimed in Claim 24, wherein the first electrode has the form of a hollow cylinder, and the second electrode is disposed on the center line of the first electrode.

26. An apparatus for generating heat as claimed in one of Claims 24 and 25, wherein the second electrode is completely dipped in the electrolyte.

27. An apparatus for generating heat as claimed in one of Claims 24 to 26, further comprising a holder for holding the second electrode, the holder being supported by the first electrode while keeping the electrical insulation between the first and second electrodes.

28. A method of generating heat on the basis of the Pons-fleischmann effect, comprising the steps of:
putting an anode and a cathode in contact with an electrolyte containing one of a deuterium ion and a deuter oxide ion, the anode being made of a reactive metal which can be eluted when used as the anode, the cathode being made of a hydrogen absorbing metal; and
connecting the anode with the cathode electrically.
